# EUROPEAN PATENT APPLICATION

(11) **EP 4 696 901 A1**
(43) Date of publication of application: **18.02.2026**
(21) Application number: 23933117.6
(22) Date of filing: 19.12.2023
(51) Int. Cl.: F16C 33/80, F16C 19/38, F16C 33/78, F16J 15/447

(54) **AXLE BEARING FOR RAILWAY CAR**

(30) Priority: 12.04.2023 JP 2023065068
(71) Applicant: NSK LTD., Tokyo 141-8560 (JP)
(72) Inventor: KURITA Shuhei, Fujisawa-shi, Kanagawa 251-8501 (JP); HORII Yoji, Fujisawa-shi, Kanagawa 251-8501 (JP); NIWA Misaki, Fujisawa-shi, Kanagawa 251-8501 (JP)
(74) Representative: Grünecker Patent- und Rechtsanwälte PartG mbB
(86) International application number: PCT/JP2023/045464
(87) International publication number: WO 2024/214343

(57) **Abstract**

A double-row tapered roller bearing (20) having an outer ring (21), an inner ring (23), and a plurality of tapered rollers (22), which are rollably disposed between the outer ring (21) and the inner ring (23), and rotatably supporting an axle, in which end sections have wheels of a railroad car attached thereto, comprises: a seal member (30) which is attached to the outer ring (21) and extends radially inward from the outer ring (21); and a one-step radial step section (26) formed on an outer diameter section (25) of the inner ring, the outer diameter section (25) being adjacent to the inner diameter portion of the seal member (30). Two-step radial gaps (41, 42) are formed between the inner diameter section of the seal member (30) and the outer diameter section (25) of the inner ring (23) in which the step section (26) is formed.

## Description

### TECHNICAL FIELD

The present invention relates to a railway vehicle axle bearing that rotatably supports an axle of a railway vehicle.

### BACKGROUND ART

In general, a railway vehicle bearing unit is attached to an end portion of an axle of a railway vehicle to rotatably support the axle and support a weight of the vehicle.

The railway vehicle bearing unit generally includes a double row tapered roller bearing (hereinafter, also simply referred to as "bearing"), which is an example of a railway vehicle axle bearing, and the bearing supports the axle of the railway vehicle. The bearing includes a single outer ring and two inner rings individually divided into rows, and a plurality of tapered rollers held by a cage are rollably arranged between two rows of raceway surfaces of the outer ring and the inner rings. The bearing is provided with a seal device (also referred to as "seal") on each of two end sides thereof in an axial direction.

In the related art, bearings used in a bogie of a railway vehicle are necessary components, and are thus disassembled and inspected at a time of periodic inspection of the vehicle, and a bearing having no abnormality is assembled again and continuously used. Due to an influence of a decline in the socially productive labor force in recent years, there has been a demand for extending a periodic inspection cycle and reducing maintenance of the railway vehicle. In addition, from a viewpoint of environmental contribution such as CO₂ reduction, a railway vehicle axle bearing (hereinafter, also simply referred to as "axle bearing" or "railway vehicle bearing") is required to have improved reliability, extended lifetime and reduced weight and be space saving. Therefore, in a future axle bearing, improved maintainability accompanied by bearing disassembly, reduced weight, and being space saving will be added values in addition to withstanding heavy loads and maintaining long-term lubricity.

An axle bearing that supports a wheelset (wheel and axle) of a railway vehicle has a function of supporting a weight of the vehicle and rotating the wheel, and heavy loads are applied to the axle bearing together with vibration during traveling. Therefore, in the axle bearing, a structure with a seal device for sealing grease inside the bearing and retaining the grease is often used.

Patent Literature 1 discloses a seal device in which a notch for inserting a disassembly tool is provided on an outer diameter portion to improve disassembly. In the seal device, a contact seal is formed between a seal member fixed to each of two end portions of an outer ring in an axial direction and an oil thrower disposed on each of two sides of an inner ring in the axial direction, and the seal device has a large width in the axial direction.

Patent Literature 2 discloses a railway vehicle bearing device in which a step portion, into which a seal member can be fell, is provided on an outer peripheral surface of an inner ring extending part in which an inner ring extends in a width direction more than an outer ring, and the seal member can be easily disassembled. The railway vehicle bearing device has a configuration in which the inner ring, from which the inner ring extending part with which the seal member is in sliding contact extends, has a larger width than the outer ring, and has a large width in an axial direction.

Patent Literature 3 discloses a double row tapered roller bearing in which a seal is installed in an opening of an annular space defined between an outer ring and an inner ring, the seal including a seal plate in which a seal member is integrally joined to a core metal fitted to an inner periphery of an end portion of the outer ring and a slinger fitted to an outer diameter of the inner ring. The seal has a compact assembly width, but has a large number of components.

Patent Literature 4 discloses a seal device in which a guide portion that guides pulling by a hand or a jig is provided at a rigid portion of an outer seal member. The seal device has a compact assembly width but a complicated seal shape, and thus an inner ring has a larger width than an outer ring and has a large width in an axial direction.

A railway vehicle bearing is lubricated with grease or oil, and as a method for maintaining a function of lubricating oil and maintaining a relatively good lubricating environment, there is a method of using an appropriate lubricating oil together with an appropriate sealing structure.

As lubricating oil used for a bearing, for example, Patent Literature 5 discloses a railway vehicle bearing in which a specific water-resistant grease is sealed around a rolling element. According to the bearing described in Patent Literature 5, even when water is mixed in the bearing, it is possible to restrict an action of moisture that hinders oil film formation, restrict metal contact on a rolling contact surface, and prevent early flaking.

Patent Literature 6 proposes a railway vehicle axle device in which a cover member is fixed to an outer peripheral surface of a rear lid. According to the axle device described in Patent Literature 6, it is possible to prevent water from entering an inside of a rolling bearing and to prevent rust and flaking of the bearing.

Patent Literature 7 describes a railway vehicle axle bearing unit in which a rear lid is divided into two divided rear lids arranged in an axial direction, and a lubricant accommodating recess is provided in a specific position. According to the bearing unit described in Patent Literature 7, fretting wear at an end surface portion of a bearing inner ring can be reduced, the amount of lubricant sealed can be increased, and a long-term lubricating effect can be obtained.

The bearings described in Patent Literatures 5 to 7 can maintain a relatively good lubricating environment by retaining lubricant inside the bearings for a long period, and can prevent flaking of a material inside the bearings. However, it is also necessary to improve reliability of the material to use the bearings for a long period in the future.

An axle bearing that supports a wheelset (wheel and axle) of a railway vehicle has a function of supporting a weight of the vehicle and rotating the wheel, and heavy loads are applied to the axle bearing together with vibration during traveling. Therefore, what is most concerned as damage to the axle bearing is flaking at a portion where components of an outer ring, an inner ring, and a rolling element (roller) constituting the bearing are in rolling contact with each other. There are various factors for the flaking of the bearing, and in a railway vehicle bearing used under a relatively good lubricating environment, internally initiated fatigue is a factor for flaking. Therefore, to prevent flaking, it is necessary that materials of the inner ring, the outer ring, and the rolling element have high cleanliness.

In a railway vehicle axle bearing in the related art, carburized bearing steel (case hardening steel) such as SNCM420 specified in JIS G 4052 is often used. In recent years, with a progress of steel making methods, a quality improvement in material cleanliness of high carbon chromium bearing steels such as SUJ2 specified in JIS G 4805 has been recognized.

As a technique for a material inside a bearing in the related art, for example, Patent Literature 8 proposes a rolling bearing in which an inner ring is formed of high carbon chromium bearing steel, a specific carburized layer or carbonitrided layer is formed on a raceway surface, and hardness of a core portion and an average amount of retained austenite are defined. According to the rolling bearing described in Patent Literature 8, excellent dimensional stability can be obtained, damage is less likely to occur even when a high fitting stress is applied, and extended lifetime can be achieved.

Patent Literature 7 also describes a material, and inner and outer rings of the bearing in the bearing unit are formed of bearing steel or carburized steel.

### CITATION LIST

### PATENT LITERATURE

Patent Literature 1: JP2009-210018A
Patent Literature 2: JP4260935B
Patent Literature 3: JP4731508B
Patent Literature 4: WO2019/74042
Patent Literature 5: JP4751808B
Patent Literature 6: JP2016-8700A
Patent Literature 7: JP2001-301617A
Patent Literature 8: JP2006-71022A

### SUMMARY OF INVENTION

### TECHNICAL PROBLEM

However, the axle bearings with a seal device as described above cannot sufficiently meet future needs such as improved maintainability, reduced weight, and being space saving in addition to a bearing function in the related art.

The present invention is made in view of the problems described above, and an object of the present invention is to provide a railway vehicle axle bearing that can achieve improved reliability, extended lifetime and reduced weight, and can save space.

### SOLUTION TO PROBLEM

The above object of the present invention is achieved by following configurations.

Provided is a railway vehicle axle bearing including an outer ring, an inner ring, and a plurality of rolling elements rollably arranged between the outer ring and the inner ring, the railway vehicle axle bearing configured to rotatably support an axle having an end portion to which a wheel of a railway vehicle is attached, the railway vehicle axle bearing including:
a seal member attached to the outer ring and extending radially inward from the outer ring; and
a radial step portion formed on an outer diameter portion of the inner ring which is adjacent to an inner diameter part of the seal member, the step portion having one or more stages, in which
between the inner diameter part of the seal member and the outer diameter portion of the inner ring on which the step portion is formed, two or more radial clearances are defined.

### ADVANTAGEOUS EFFECTS OF INVENTION

According to the railway vehicle axle bearing of the present invention, it is possible to achieve improved reliability, extended lifetime and reduced weight, and to save space.

### BRIEF DESCRIPTION OF DRAWINGS

FIG. 1 is a schematic cross-sectional view illustrating a railway vehicle bearing unit including a railway vehicle axle bearing according to a first embodiment of the present invention.
FIG. 2 is an enlarged schematic cross-sectional view of a part A in FIG. 1.
FIG. 3 is a schematic cross-sectional view illustrating a railway vehicle bearing unit including a railway vehicle axle bearing according to a second embodiment of the present invention.
FIG. 4 is an enlarged schematic cross-sectional view of a part B in FIG. 1.

### DESCRIPTION OF EMBODIMENTS

Hereinafter, railway vehicle axle bearings according to embodiments of the present invention will be described in detail with reference to the drawings.

### (First Embodiment)

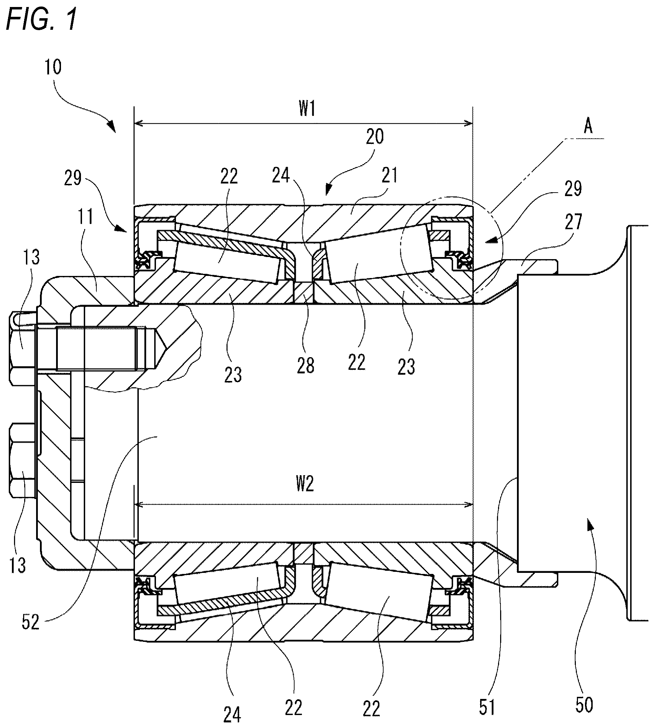

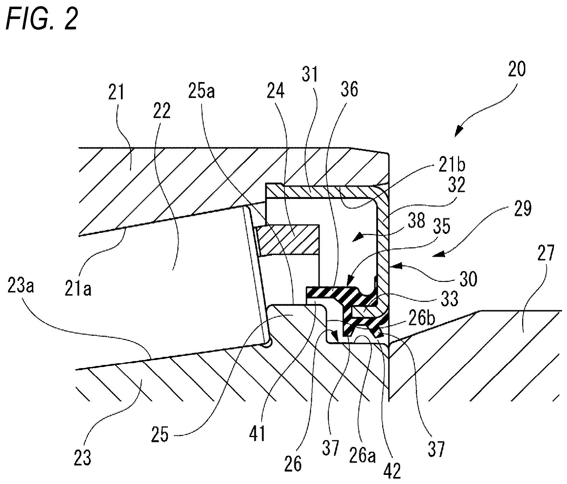

FIG. 1 is a schematic cross-sectional view illustrating a railway vehicle bearing unit 10 including a railway vehicle bearing according to a first embodiment of the present invention. FIG. 2 is an enlarged schematic cross-sectional view of a part A in FIG. 1.

As illustrated in FIG. 1, the railway vehicle bearing unit 10 in the first embodiment includes a double row tapered roller bearing 20 as a railway vehicle axle bearing, and the double row tapered roller bearing 20 rotatably supports an axle 50 of the railway vehicle. To an outer end portion of the axle 50 (that is, a part having a large shaft diameter in FIG. 1), a wheel, which is not illustrated, of the railway vehicle is attached.

The double row tapered roller bearing 20 includes a single outer ring 21, two inner rings 23, 23 individually divided into rows, a plurality of tapered rollers (rolling elements) 22 rollably disposed between two rows of raceway surfaces of the outer ring 21 and the inner rings 23, 23, a cage 24 holding the plurality of tapered rollers 22, and an inner ring spacer 28 disposed between the inner rings 23, 23 to adjust a bearing clearance. The outer ring 21 is formed with, at an appropriate position in a central portion thereof in an axial direction, a grease inlet, which is not illustrated, for sealing grease (lubricant) in a bearing space.

On two end sides of the inner rings 23, 23 in the axial direction, a front lid 11 and a rear lid 27 are disposed around the axle 50 to abut on respective end surfaces of the inner rings 23. The inner rings 23, 23 and the rear lid 27 are sandwiched between an outer peripheral surface step portion 51 of the axle 50 and the front lid 11, and are fixed by bolts 13 from a shaft end 52 side of the axle 50.

The outer ring 21 is positioned in the axial direction by being fixed to a housing which is not illustrated. Here, the outer ring 21 has a width dimension W1 the same as a width dimension W2 of the two inner rings 23, 23.

In the first embodiment, high carbon chromium bearing steel is used as a material of the outer ring 21, and carburized bearing steel is used as a material of the inner rings 23, 23. Examples of the high carbon chromium bearing steel include grades SUJ2, SUJ3, and SUJ5 specified in JIS G 4805 and 52100 specified in SAE J 404. Examples of the carburized bearing steel include grades SCr415, SCr420, SCM420, SNCM220, and SNCM815 specified in JIS G 4053 and 5120, 8620, and 4320 specified in SAE J 404.

On two sides of the double row tapered roller bearing 20 according to the first embodiment, that is, at end portions of the axle 50 in the axial direction, seal devices 29, 29 are provided, which prevent foreign matter from entering the double row tapered roller bearing 20 and prevent lubricant (grease) from leaking from an inside of the bearing.

As illustrated in FIG. 2, the seal device 29 includes a metal seal member 30 that is attached to the outer ring 21 and extends radially inward from the outer ring 21, and a one-stage radial step portion 26 that is formed on an outer diameter portion (large collar) 25 of the inner ring 23 which is adjacent to an elastic body 35 constituting an inner diameter part of the seal member 30. The step portion 26 is formed on the outer diameter portion 25 of the inner ring 23 on an end portion side in a width direction (right side in FIG. 2) relative to an inner ring raceway surface 23a.

The seal member 30 has a U-shaped cross section including an outer cylindrical portion 31 attached to an inner diameter portion 21b of the outer ring 21 on an end portion side in the width direction relative to an outer ring raceway surface 21a, a standing plate portion 32 extending radially inward from an outer end of the outer cylindrical portion 31 in the width direction, and an inner cylindrical portion 33 extending toward an inside of the bearing from an inner diameter end of the standing plate portion 32.

The inner cylindrical portion 33 is integrally provided with the elastic body 35 that includes a cylindrical projection 36 extending toward the inside of the bearing to narrow a radial clearance between the inner cylindrical portion 33 and an outer peripheral surface 25a of the outer diameter portion 25, and a pair of annular projections 37 extending radially inward to narrow a radial clearance between the inner cylindrical portion 33 and an outer peripheral surface 26a of the step portion 26. The elastic body 35 constitutes an inner diameter part of the seal member 30 together with the inner cylindrical portion 33.

Therefore, two-stage (two or more) radial clearances 41, 42 are defined between the elastic body 35 constituting the inner diameter part of the seal member 30 and the outer diameter portion 25 of the inner ring 23 on which the step portion 26 is formed, and a so-called labyrinth structure is formed.

That is, the seal device 29 in the first embodiment is a non-contact type seal device in which the two-stage radial clearances 41, 42 (labyrinth structure) are defined by the outer diameter portion 25 of the inner ring 23 on which the step portion 26 is formed and the seal member 30 attached to the inner diameter portion 21b of the outer ring 21.

In this manner, by providing an inner portion side of the double row tapered roller bearing 20 with a function of sealing the inside of the bearing by the labyrinth structure, the width dimension W1 of the outer ring 21 in the double row tapered roller bearing 20 can be made equal to the width dimension W2 of the two inner rings 23, 23, which facilitates weight reduction and space saving of the double row tapered roller bearing 20. Further, the double row tapered roller bearing 20 can maintain a sealing property inside the bearing with a small number of components with a compact bearing dimension.

Further, by increasing the number of steps of the radial step portion 26 formed on the outer diameter portion 25 of the inner ring 23 and making the inner diameter part of the seal member 30 adjacent to the step portions 26, a more complicated labyrinth structure can be provided to improve a sealing property.

Further, the seal member 30 in the first embodiment has a U-shaped cross section in which the inner diameter part extends toward the inside of the bearing, and defines a grease reservoir space 38 which is large in the axial direction toward the inside of the bearing. Therefore, lubricity of the double row tapered roller bearing 20 is easily maintained, and contribution to prevention of grease leakage can be expected.

Further, the elastic body 35 including the cylindrical projection 36 and the pair of annular projections 37 is integrally provided on the inner cylindrical portion 33 of the seal member 30 in the first embodiment. The elastic body 35 formed of an elastic sealing material would not be damaged even when the cylindrical projection 36 or the annular projection 37 comes into contact with the outer diameter portion 25 or the step portion 26 of the inner ring 23, and thus the radial clearances 41, 42 can be minimized to improve the sealing property.

The inner cylindrical portion 33 of the seal member 30 has a tip end facing a side wall surface 26b between the outer diameter portion 25 and the step portion 26 of the inner ring 23 in an axle direction. Therefore, when the seal member 30 is disassembled from the double row tapered roller bearing 20, the side wall surface 26b of the inner ring 23 pushes the inner cylindrical portion 33 of the seal member 30 outward in the axle direction, so that the seal member 30 can be easily separated from the outer ring 21.

As described above, according to the double row tapered roller bearing 20 in the first embodiment, it is possible to achieve improved reliability, extended lifetime and reduced weight, and to save space.

Further, in the double row tapered roller bearing 20 according to the first embodiment configured as described above, the outer ring 21 and the inner rings 23, 23 are formed of different materials. Effects of such a configuration will be described in detail below.

In general, an axle bearing is used in a state where an inside of the bearing is not pressurized but has a clearance. Therefore, flaking is most likely to occur on an outer ring raceway surface. In the first embodiment, since the outer ring 21 is formed of high carbon chromium bearing steel which is a high cleanliness material, it is possible to obtain a high effect of restricting internally initiated flaking.

In general, inner diameter surfaces of the inner rings 23, 23 and an outer diameter surface of the axle 50 are in contact with a sufficient interference. When the interference is not sufficient to support a weight of a large vehicle, creep occurs in the inner rings 23, 23, and thus it is necessary to set the interference to be large to prevent the creep. In the first embodiment, the inner rings 23, 23 are formed of carburized bearing steel, and compressive stress is generated in a surface layer portion of the carburized bearing steel by carburizing heat treatment. Therefore, by using the carburized bearing steel having compressive stress in a radial direction of the axle 50 as the material of the inner rings 23, 23, it is possible to set an allowable value of the interference to be large.

In this manner, according to the double row tapered roller bearing 20 in the first embodiment, it is possible to prevent flaking inside the bearing and to obtain high reliability over a long period.

As described above, when a material inside the bearing is appropriately selected while maintaining a relatively good lubrication environment, the bearing can be used with high reliability over a long period. In the first embodiment, since the double row tapered roller bearing 20 includes the seal devices 29, 29 installed on two end portions in the axial direction thereof, it is possible to prevent foreign matter from entering the inside of the double row tapered roller bearing 20 and prevent the lubricant from leaking from the inside of the double row tapered roller bearing 20, and it is possible to maintain a good lubrication environment. As a result, operational reliability of the bearing can be further improved, and the lifetime of the bearing can be extended.

### (Second Embodiment)

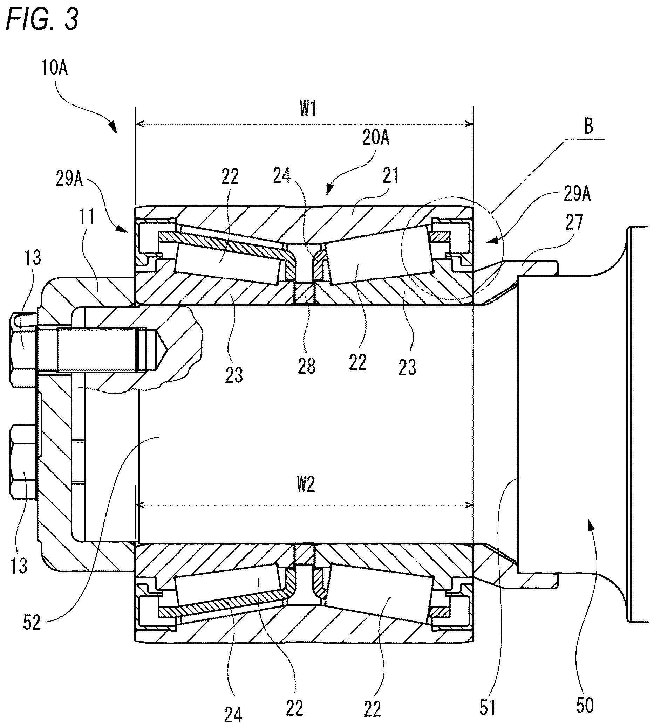

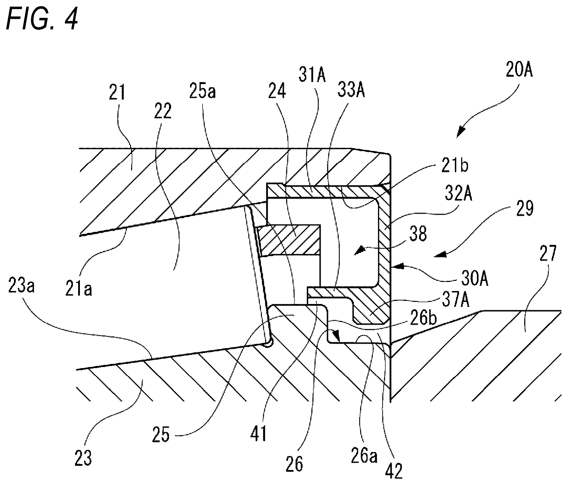

FIG. 3 is a schematic cross-sectional view illustrating a railway vehicle bearing unit 10A that includes a railway vehicle bearing according to a second embodiment of the present invention. FIG. 4 is an enlarged schematic cross-sectional view of a part B in FIG. 3. In a double row tapered roller bearing 20A as the railway vehicle bearing according to the second embodiment, the same components as those of the double row tapered roller bearing 20 according to the first embodiment are denoted by the same reference numerals, and detailed description thereof will be omitted.

As illustrated in FIG. 3, the railway vehicle bearing unit 10A in the second embodiment includes the double row tapered roller bearing 20A as a railway vehicle axle bearing, and the double row tapered roller bearing 20A rotatably supports the axle 50 of a railway vehicle.

On two sides of the double row tapered roller bearing 20A according to the second embodiment, seal devices 29A, 29A are provided, which prevent foreign matter from entering the double row tapered roller bearing 20A and prevent grease from leaking from an inside of the bearing.

As illustrated in FIG. 4, the seal device 29A includes a metal seal member 30A that is attached to the outer ring 21 and extends radially inward from the outer ring 21, and the one-stage radial step portion 26 that is formed on the outer diameter portion (large collar) 25 of the inner ring 23 which is adjacent to an inner diameter part of the seal member 30A. The step portion 26 is formed on the outer diameter portion 25 of the inner ring 23 on the end portion side in the width direction (right side in FIG. 4) relative to the inner ring raceway surface 23a.

The seal member 30A has a U-shaped cross section including an outer cylindrical portion 31A attached to the inner diameter portion 21b of the outer ring 21 on the end portion side in the width direction relative to the outer ring raceway surface 21a, a standing plate portion 32A extending radially inward from an outer end of the outer cylindrical portion 31A in the width direction, and an inner cylindrical portion 33A extending toward an inside of the bearing from an inner diameter end of the standing plate portion 32A to narrow a radial clearance between the seal member 30A and the outer peripheral surface 25a of the outer diameter portion 25.

The inner cylindrical portion 33A is integrally provided with an annular projection 37A that protrudes radially inward to narrow a radial clearance between the inner cylindrical portion 33A and the outer peripheral surface 26a of the step portion 26. The annular projection 37A constitutes the inner diameter part of the seal member 30A together with the inner cylindrical portion 33A.

Therefore, the two-stage radial clearances 41, 42 are defined between the inner cylindrical portion 33A, as well as the annular projection 37A constituting the inner diameter part of the seal member 30, and the outer diameter portion 25 of the inner ring 23 on which the step portion 26 is formed, and a so-called labyrinth structure is formed.

That is, the seal device 29 in the second embodiment is a non-contact type seal device in which the two-stage radial clearances 41, 42 (labyrinth structure) are defined by the outer diameter portion 25 of the inner ring 23 on which the step portion 26 is formed and the seal member 30A attached to the inner diameter portion 21b of the outer ring 21.

In this manner, by providing an inner portion side of the double row tapered roller bearing 20A with a function of sealing the inside of the bearing by the labyrinth structure, the width dimension W1 of the outer ring 21 in the double row tapered roller bearing 20A can be made equal to the width dimension W2 of the two inner rings 23, 23, which facilitates weight reduction and space saving of the double row tapered roller bearing 20A. Further, the double row tapered roller bearing 20A can maintain a sealing property inside the bearing with a small number of components with a compact bearing dimension.

Further, by increasing the number of steps of the radial step portion 26 formed on the outer diameter portion 25 of the inner ring 23 and making the inner diameter part of the seal member 30 adjacent to the step portions 26, a more complicated labyrinth structure can be provided to improve the sealing property.

Further, the seal member 30A in the second embodiment has a U-shaped cross section in which the inner diameter part extends toward the inside of the bearing, and defines the grease reservoir space 38 which is large in the axial direction toward the inside of the bearing. Therefore, lubricity of the double row tapered roller bearing 20A is easily maintained, and contribution to prevention of grease leakage can be expected.

Further, the seal member 30A in the second embodiment is integrally formed of the same material such as a metal material or a resin material, so that manufacturing costs can be reduced.

Therefore, according to the double row tapered roller bearing 20A in the second embodiment, similar to the double row tapered roller bearing 20 in the first embodiment, it is possible to achieve improved reliability, extended lifetime, reduced weight and further reduced costs, and to save space.

The annular projection 37A of the inner cylindrical portion 33A of the seal member 30A faces the side wall surface 26b between the outer diameter portion 25 and the step portion 26 of the inner ring 23 in the axle direction. Therefore, when the seal member 30A is disassembled from the double row tapered roller bearing 20A, the side wall surface 26b of the inner ring 23 pushes the inner annular projection 37A of the seal member 30 outward in the axle direction, so that the seal member 30A can be easily separated from the outer ring 21.

The present invention is not limited to the above-described embodiments, and can be appropriately modified, improved, and the like. Further, a material, a shape, a size, the number, an arrangement position, and the like of each component in the above-described embodiments can be freely set and are not limited as long as the present invention can be implemented.

For example, in the present embodiments, the double row tapered roller bearings 20, 20A are applied as railway vehicle axle bearings, but the present invention is not limited thereto, and other types of rolling bearings may be applied.

Here, features of the embodiments of the railway vehicle axle bearing according to the present invention described above will be briefly summarized and listed in following [1] to [5].
[1] Provided is a railway vehicle axle bearing (double row tapered roller bearings 20, 20A) including an outer ring (21), an inner ring (23), and a plurality of rolling elements (tapered rollers 22) rollably arranged between the outer ring (21) and the inner ring (23), the railway vehicle axle bearing configured to rotatably support an axle (50) having an end portion to which a wheel of a railway vehicle is attached, the railway vehicle axle bearing (double row tapered roller bearings 20, 20A) including:
   a seal member (30, 30A) attached to the outer ring (21) and extending radially inward from the outer ring (21); and
   a radial step portion (26) formed on an outer diameter portion (25) of the inner ring (23) which is adjacent to an inner diameter part of the seal member (30, 30A), the step portion having one or more stages, in which
   between the inner diameter part of the seal member (30, 30A) and the outer diameter portion (25) of the inner ring (23) on which the step portion (26) is formed, two or more radial clearances (41, 42) are defined.

According to the above configuration [1], a labyrinth structure having two or more radial clearances (41, 42) is formed by the outer diameter portion (25) of the inner ring (23) on which the step portion (26) is formed and the seal member (30) attached to the inner diameter portion (21b) of the outer ring (21).

In this manner, providing an inner portion side of the double row tapered roller bearing (20, 20A) with a function of sealing the inside of the bearing by the labyrinth structure facilitates weight reduction and space saving of the double row tapered roller bearing (20, 20A). Further, the double row tapered roller bearing (20, 20A) can maintain a sealing property inside the bearing with a small number of components with a compact bearing dimension.

[2] In the railway vehicle axle bearing (double row tapered roller bearing 20, 20A) according to [1],
the outer ring (21) has a width dimension (W1) the same as a width dimension (W1) of the inner ring (23).

According to the above configuration [2], making the width dimension (W1) of the outer ring (21) and the width dimension (W2) of the two inner rings (23), (23) in the double row tapered roller bearing (20, 20A) the same facilitates weight reduction and space saving of the double row tapered roller bearing (20, 20A).

[3] In the railway vehicle axle bearing (double row tapered roller bearing 20, 20A) according to [1] or [2],
the seal member (30, 30A) has a U-shaped cross section including an outer cylindrical portion (31, 31A) attached to an inner diameter portion (21b) of the outer ring (21), a standing plate portion (32, 32A) extending radially inward from an outer end of the outer cylindrical portion (31, 31A) in a width direction, and an inner cylindrical portion (33, 33A) extending toward an inside of the bearing from an inner diameter end of the standing plate portion (32, 32A).

According to the above configuration [3], the seal member (30, 30A) has a U-shaped cross section, and thus it is possible to define a grease reservoir space (38) that is large in an axial direction toward the inside of the bearing. Therefore, lubricity of the railway vehicle axle bearing (double row tapered roller bearings 20, 20A) is easily maintained, and contribution to prevention of grease leakage can be expected.

[4] In the railway vehicle axle bearing (double row tapered roller bearing 20) according to [3],
the inner cylindrical portion (33) is integrally provided with an elastic body (35) that includes a cylindrical projection (36) extending toward the inside of the bearing to narrow a radial clearance between the inner cylindrical portion and the outer diameter portion (25), and an annular projection (37) extending radially inward to narrow a radial clearance between the inner cylindrical portion and the step portion (26).

With the above configuration [4], the elastic body (35) formed of an elastic sealing material would not be damaged even when the cylindrical projection (36) or the annular projection (37) comes into contact with the outer diameter portion (25) or the step portion (26) of the inner ring (23), and thus the radial clearance (41, 42) can be minimized to improve a sealing property.

[5] In the railway vehicle axle bearing (double row tapered roller bearing 20, 20A) according to any one of [1] to [4],
the outer ring (21) is formed of high carbon chromium bearing steel, and
the inner ring (23) is formed of carburized bearing steel.

According to the above configuration [5], the outer ring (21) is formed of high carbon chromium bearing steel which is a high cleanliness material, and thus it is possible to obtain a high effect of restricting internally initiated flaking. Further, the inner ring (23) is formed of carburized bearing steel, and compressive stress is generated in a surface layer portion of the carburized bearing steel by carburizing heat treatment. Therefore, by using the carburized bearing steel having compressive stress in a radial direction of an axle (50) as a material of the inner ring (23), it is possible to set an allowable value of interference to be large.

In this manner, according to the railway vehicle axle bearing (double row tapered roller bearings 20, 20A) having the configuration [5], it is possible to prevent flaking inside the bearing and to obtain high reliability over a long period.

The present application is based on a Japanese patent application (No. 2023-065068) filed on April 12, 2023, contents of which are incorporated herein by reference.

### INDUSTRIAL APPLICABILITY

The railway vehicle axle bearing according to the present invention can sufficiently meet future needs such as improved maintainability, reduced weight and being space saving in addition to a bearing function in the related art.

### REFERENCE SIGNS LIST

10 railway vehicle bearing unit
20 double row tapered roller bearing (railway vehicle axle bearing)
21 outer ring
22 tapered roller (rolling element)
23 inner ring
25 outer diameter portion
26 step portion
29 seal device
41, 42 radial clearance
50 axle

## Claims

1. A railway vehicle axle bearing including an outer ring, an inner ring, and a plurality of rolling elements rollably arranged between the outer ring and the inner ring, the railway vehicle axle bearing configured to rotatably support an axle having an end portion to which a wheel of a railway vehicle is attached, the railway vehicle axle bearing comprising:
a seal member attached to the outer ring and extending radially inward from the outer ring; and
a radial step portion formed on an outer diameter portion of the inner ring which is adjacent to an inner diameter part of the seal member, the step portion having one or more stages, wherein
between the inner diameter part of the seal member and the outer diameter portion of the inner ring on which the step portion is formed, two or more radial clearances are defined.

2. The railway vehicle axle bearing according to claim 1, wherein
the outer ring has a width dimension the same as a width dimension of the inner ring.

3. The railway vehicle axle bearing according to claim 1 or 2, wherein
the seal member has a U-shaped cross section including an outer cylindrical portion attached to an inner diameter portion of the outer ring, a standing plate portion extending radially inward from an outer end of the outer cylindrical portion in a width direction, and an inner cylindrical portion extending toward an inside of the bearing from an inner diameter end of the standing plate portion.

4. The railway vehicle axle bearing according to claim 3, wherein
the inner cylindrical portion is integrally provided with an elastic body that includes a cylindrical projection extending toward the inside of the bearing to narrow a radial clearance between the inner cylindrical portion and the outer diameter portion, and an annular projection extending radially inward to narrow a radial clearance between the inner cylindrical portion and the step portion.

5. The railway vehicle axle bearing according to any one of claims 1 to 4, wherein
the outer ring is formed of high carbon chromium bearing steel, and
the inner ring is formed of carburized bearing steel.
